# EUROPÄISCHE PATENTANMELDUNG

(11) **EP 2 732 740 A1**
(43) Veröffentlichungstag der Anmeldung: **21.05.2014**
(21) Anmeldenummer: 13191866.6
(22) Anmeldetag: 07.11.2013
(51) Int. Cl.: A47J 31/44

(54) **Vorrichtung zum Emulgieren einer Mischung aus Luft, Dampf und Milch**

(30) Priorität: 16.11.2012 DE 102012220991
(71) Anmelder: BSH Bosch und Siemens Hausgeräte GmbH, 81739 München (DE)
(72) Erfinder: Haslacher, Christian, 5303 Thalgau (AT); Hauser, Andreas, 83352 Altenmarkt (DE)

(57) **Zusammenfassung**

Die vorliegende Erfindung betrifft eine Vorrichtung (1) zum Emulgieren einer Mischung aus Luft, Dampf und Milch, insbesondere ein Milchaufschäumer für einen Kaffeeautomaten (2), mit
- einem Dampfzuführkanal (3),
- einem in eine Luftkammer (4) mündenden Luftzuführkanal (5),
- einem Milchzuführkanal (6), der in einer Spülfunktion von einem Spülfluid durchströmbar ist,
- einer Unterdruckkammer (7), in welcher die Kanäle (3,5,6) münden, und die über eine Emulgierkammer (10) mit der Umgebung verbunden ist,
- einem drehbaren Ventilelement (8), das je nach Drehstellung einen Milchbezug,
einen Heißwasserbezug oder einen Milchschaumbezug ermöglicht. Erfindungswesentlich ist dabei, dass das Ventilelement (8) derart ausgebildet ist, dass es in einer weiteren Drehstellung Spülfluid durch den Milchzuführkanal (6), die Luftkammer (4), die Unterdruckkammer (7) und die Emulgierkammer (10) leitet und dadurch deren Reinigung ermöglicht.

Hierdurch ist eine einfache und hygienische Reinigung aller mit Milch in Berührung kommenden Teile der Vorrichtung (1) möglich.

## Beschreibung

Die vorliegende Erfindung betrifft eine Vorrichtung zum Emulgieren einer Mischung aus Luft, Dampf und Milch, insbesondere einen Milchaufschäumer für einen Kaffeeautomaten, gemäß dem Oberbegriff des Anspruchs 1. Die Erfindung betrifft außerdem einen mit einer derartigen Vorrichtung ausgestatteten Kaffeeautomaten sowie ein zugehöriges Ventilelement.

Generell sollten Milchaufschäumer leicht zu reinigen sein, um insbesondere Milch- und Fettreste vollständig entfernen und dadurch den Milchaufschäumer auf einem hohen hygienischen Standard halten zu können. Aus diesem Grund sind viele der bekannten Milchaufschäumer aus mehreren Teilen zusammengesetzt und zu öffnen. Durch das Öffnen kann ein direkter Zugang zu in dem Milchaufschäumer gelegenen Räumen, wie beispielsweise der Emulgierkammer, gewährleistet werden, wodurch diese im Vergleich zu vollständig geschlossenen Systemen leichter und damit auch besser zu reinigen sind.

Das Öffnen des Milchaufschäumers ist jedoch vergleichsweise aufwändig und erfordert zudem zumindest technische Grundkenntnisse. Demgegenüber muss bei geschlossenen und nicht zu öffnenden Systemen zuverlässig sichergestellt sein, dass diese auch ohne ein aufwändiges Auseinanderbauen hygienisch einwandfrei gereinigt werden können.

Die vorliegende Erfindung beschäftigt sich daher mit dem Problem, für eine Vorrichtung der gattungsgemäßen Art eine verbesserte Ausführungsform anzugeben, die sich durch eine geschlossene Bauweise, gleichzeitig aber auch durch eine vergleichsweise einfache und dennoch zuverlässige Reinigungsmöglichkeit auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Milchaufschäumer für einen Kaffeeautomaten, ein drehbares Ventilelement vorzusehen, das je nach Drehstellung einen Milchbezug, einen Heißwasserbezug oder einen Milchschaumbezug ermöglicht und erfindungsgemäß in einer weiteren Drehstellung Spülfluid, beispielsweise Spülwasser, durch zumindest sämtliche mit Milch in Berührung kommende Baukomponenten, wie beispielsweise einen Milchzuführkanal, eine Luftkammer, eine Unterdruckkammer und eine Emulgierkammer, leitet und dadurch deren Reinigung ohne ein Auseinanderbauen des Milchaufschäumers ermöglicht. Unter dem Begriff "Milchaufschäumer" soll dabei allgemein eine Vorrichtung zum Emulgieren einer Mischung aus Luft, Dampf und Milch verstanden werden. Eine derartige erfindungsgemäße Vorrichtung verfügt über einen Dampfzuführkanal, einen in eine Luftkammer mündenden Luftzuführkanal, sowie einen Milchzuführkanal, der in einer Spülfunktion von einem Spülfluid durchströmbar ist. Der Dampfzuführkanal, der Luftzuführkanal sowie der Milchzuführkanal münden dabei direkt oder indirekt in die Unterdruckkammer, in welcher das eigentliche Aufschäumen erfolgt. Um nun wahlweise Milch, heißes Wasser oder Milchschaum beziehen zu können, ist das oben beschriebene drehbare Ventilelement vorgesehen, das durch ein einfaches Verdrehen, beispielsweise um jeweils 90°, alternativ den Milchbezug, den Heißwasserbezug oder den Milchschaumbezug ermöglicht. Durch eine entsprechende erfindungsgemäße Kanalführung innerhalb des Ventilelementes ist es nun möglich, dieses in eine vierte Drehstellung zu verstellen, in welchem Spülfluid durch den Milchzuführkanal, die Luftkammer, die Unterdruckkammer und die Emulgierkammer Auslass geleitet wird und dadurch diese gereinigt werden können. Bisher war die Reinigung der Luftkammer nicht definiert möglich, da das Spülfluid nur durch den Milchzuführkanal in die Unterdruckkammer und von dort in die Emulgierkammer geleitet wurde. Bei der erfindungsgemäßen Vorrichtung wird das Spülfluid durch den Milchzuführkanal und anschließend über die Luftkammer in die Unterdruckkammer und die Emulgierkammer geleitet, so dass sämtliche dieser Teile gespült und damit gereinigt werden können. Hierdurch kann insbesondere ein aufwändiges Auseinanderbauen zum hygienischen Reinigen besagter Teile vermieden werden, was für den Benutzer eine deutliche Komfortsteigerung darstellt.

Zweckmäßig durchläuft der Milchzuführkanal das Ventilelement axial und ist im Bereich der Unterdruckkammer T-förmig abgewinkelt. Darüber hinaus ist ein quer zum Milchzuführkanal verlaufender Spülkanal im Ventilelement vorgesehen, über welchen in einer vordefinierten Drehstellung Spülfluid über den Milchzuführkanal und den Spülkanal in die Luftkammer und anschließend in die Unterdruckkammer geleitet werden kann. Dieser Spülkanal ist bei bisherigen drehbaren Ventilelementen nicht vorgesehen, wodurch das Spülfluid lediglich den T-förmigen Milchzuführkanal durchlief und anschließend sofort in die Unterdruckkammer geleitet wurde. Eventuell beim Herstellen von Milchschaum von der Unterdruckkammer über den Luftzuführkanal in die Luftkammer zurückspritzende Milchreste konnten somit nicht entfernt werden, so dass eine einwandfreie Reinigung der Luftkammer nicht oder alternativ nur durch eine aufwändiges Auseinanderbauen der Vorrichtung, beispielsweise durch ein Entfernen des Ventilelementes, möglich war.

Bei einer vorteilhaften Weiterbildung der erfindungsgemäßen Lösung ist das Ventilelement zum Milchbezug, zum Milchschaumbezug, zum Heißwasserbezug und zum Spülen jeweils um 90° drehbar. In jedem Quadrant wird somit dem Benutzer genau eine genau definierte Funktion angeboten, wobei die jeweilige der Funktion zugeordnete Drehstellung beispielsweise durch eine Rastposition haptisch angezeigt werden kann. Die Spülfunktion ist dabei vorzugsweise zwischen der Drehstellung des Ventilelements zum Milchbezug und zum Milchschaumbezug gelegen. Je nach Ausrichtung des Spülkanals innerhalb des Ventilelementes sind selbstverständlich rein theoretisch auch andere Drehstellungen zur Realisierung der Spülfunktion denkbar.

Bei einer weiteren vorteilhaften Ausführungsform der erfindungsgemäßen Lösung ist der in die Unterdruckkammer mündende Dampfzuführkanal als Strahlpumpe ausgebildet bzw. an dessen in die Unterdruckkammer mündendem Ende eine derartige Strahlpumpe angeordnet. Eine solche Strahlpumpe besteht üblicherweise aus einem glattwandigen Rohrstück mit einer Verengung des Querschnitts und bewirkt eine Beschleunigung der Strömungsgeschwindigkeit, wodurch ein Unterdruck entsteht, durch den Milch und Luft angesaugt werden und der in der Emulgierkammer gewünschte Schäumeffekt verbessert werden kann. Unter dem Begriff "Strahlpumpe" ist eine Pumpe zu verstehen, in der die Pumpwirkung durch einen Fluidstrahl erzeugt wird, der durch Impulsaustausch ein anderes Medium ansaugt, beschleunigt und verdichtet/fördert, sofern es unter ausreichendem Druck steht. Da diese Pumpenart sehr einfach aufgebaut ist und keinerlei bewegte Teile hat, ist sie besonders robust und wartungsarm und vielseitig einsetzbar.

Zweckmäßig ist das Ventilelement als Kunststoffspritzgussteil ausgebildet. Die Ausbildung des drehbaren Ventilelementes als Kunststoffspritzgussteil bietet die Möglichkeit, dieses nicht nur vergleichsweise kostengünstig, sondern zudem auch qualitativ hochwertig, und insbesondere in unterschiedlichsten Farben, auszubilden. Da sich Kunststoff zudem vergleichsweise hygienisch reinigen lässt, stellt die Ausbildung als Kunststoffspritzgussteil eine kostengünstige Alternative zu beispielsweise einem Ventilelement aus Metall dar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine Schnittdarstellung durch eine erfindungsgemäße Vorrichtung zum Emulgieren einer Mischung aus Luft, Dampf und Milch, bei einem Milchschaumbezug,
- Fig. 2: eine Darstellung wie in Fig. 1, jedoch bei einem Heißmilchbezug,
- Fig. 3: eine Darstellung wie in Fig. 1, jedoch bei einem Heißwasserbezug,
- Fig. 4: eine Vorrichtung nach dem Stand der Technik bei einer Spülfunktion,
- Fig. 5: die erfindungsgemäße Vorrichtung bei der Spülfunktion.

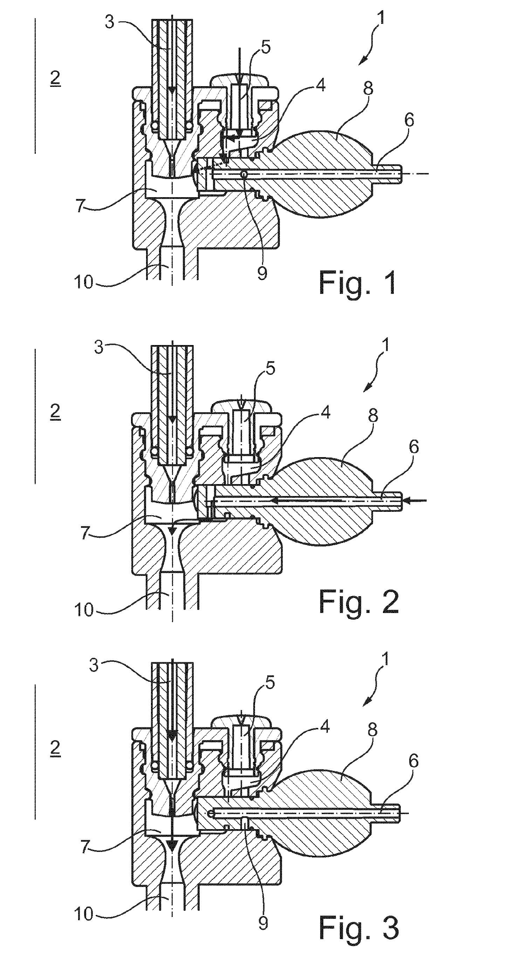

Entsprechend den Figuren 1 bis 3 und 5 weist eine erfindungsgemäße Vorrichtung 1 zum Emulgieren einer Mischung aus Luft, Dampf und Milch, insbesondere ein Milchaufschäumer für einen Kaffeeautomaten 2 einen Dampfzuführkanal 3, einen in eine Luftkammer 4 mündenden Luftzuführkanal 5, einen Milchzuführkanal 6 sowie eine Unterdruckkammer 7 auf, in welche die einzelnen Kanäle 3, 5 und 6 münden und die über eine Emulgierkammer 10 mit einem nicht gezeigten Auslass verbunden ist. Ebenfalls vorgesehen ist ein drehbares Ventilelement 8, welches je nach Drehstellung einen Milchbezug, insbesondere einen Heißmilchbezug (vergleiche Figur 2), einen Heißwasserbezug (vergleiche Figur 3) sowie einen Milchschaumbezug (vergleiche Figur 1) ermöglicht. In einer Spülfunktion wird der Milchzuführkanal 6 alternativ nicht von Milch, sondern von einem Spülfluid, beispielsweise von Spülwasser, durchströmt.

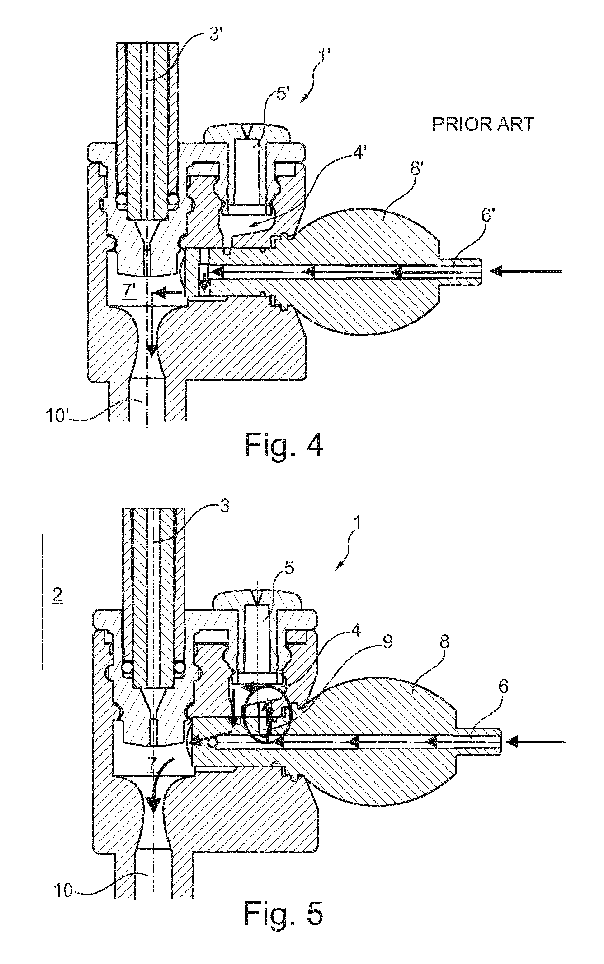

In Fig. 4 ist eine aus dem Stand der Technik bekannte Vorrichtung 1' gezeigt, anhand welcher die bisherige eingeschränkte Reinigungsfunktion erläutert werden soll. In der Figur 4 sind die mit den übrigen Zeichnungen übereinstimmenden Bauteile mit gleichen, jedoch mit einem Beistrich versehenen Bezugszeichen dargestellt.

Die Vorrichtung 1' gemäß der Figur 4 ermöglicht so in einer Spülfunktion lediglich ein Spülen des Milchzuführkanals 6' und der Unterdruckkammer 7', wobei das Spülfluid anschließend über die Emulgierkammer 10' und einen nicht gezeigten Auslass nach außen geleitet wird (vergleiche die Pfeile in Figur 4). Eine Reinigung der Luftkammer 4' war bei der aus dem Stand der Technik bekannten Vorrichtung 1' nicht definiert möglich. Da jedoch beim Herstellen von Heißmilch bzw. Milchschaum durchaus Milchreste in die Luftkammer 4, 4' gelangen können, sollte auch diese zuverlässig gereinigt werden können. Bei der aus dem Stand der Technik bekannten Vorrichtung 1' war dies nur durch ein Auseinanderbauen der Vorrichtung 1' möglich, was jedoch nicht nur aufwändig ist, sondern zudem auch technische Grundkenntnisse vom Benutzer erfordert.

Gänzlich anders gelagert ist der Sachverhalt bei der erfindungsgemäßen Vorrichtung 1, da bei dieser das Ventilelement 8 derart ausgebildet ist, dass es in einer weiteren Drehstellung Spülfluid durch den Milchzuführkanal 6, die Luftkammer 4, die Unterdruckkammer 7 und die Emulgierkammer 10 leitet und dadurch deren hygienische Reinigung ermöglicht. Der Milchzuführkanal 6 durchläuft dabei das Ventilelement 8 im Wesentlichen axial und ist im Bereich der Unterdruckkammer 7 T-förmig abgewinkelt (vergleiche insbesondere die Figuren 1 und 2). Um nun zusätzlich die Reinigung der Luftkammer 4 zu ermöglichen, ist im Ventilelement 8 ein quer zum Milchzuführkanal 6 verlaufender Spülkanal 9 vorgesehen, über welchen in der gemäß der Figur 5 gezeigten Drehstellung Spülfluid vom Milchzuführkanal 6 über den Spülkanal 9 in die Luftkammer 4 und anschließend in die Unterdruckkammer 7 geleitet und diese dadurch gereinigt werden können. Das Spülfluid verlässt die Vorrichtung 1 über die Emulgierkammer 10 und reinigt somit auch diese noch. Der Spülkanal 9 verläuft dabei im Wesentlichen orthogonal zum T-förmigen Milchzuführkanal 6, das heißt aus einer Ebene der T-Form heraus. Zum Milchbezug, zum Milchschaumbezug, zum Heißwasserbezug und zum Spülen ist dabei das erfindungsgemäße Ventilelement 8 jeweils um 90° drehbar, wie dies in den Figuren 1 bis 3 und 5 dargestellt ist. Um das Ventilelement 8 zudem kostengünstig und gleichzeitig qualitativ hochwertig herstellen zu können, ist dieses als Kunststoffspritzgussteil ausgebildet und ermöglicht dadurch zudem eine nahezu beliebige Farbwahl.

Mit dem erfindungsgemäßen Ventilelement 8 und damit auch mit der erfindungsgemäßen Vorrichtung 1 ist ein hygienisches und einwandfreies Reinigen der mit Milch beaufschlagten Teile der Vorrichtung 1 möglich, ohne dass hierzu die Vorrichtung 1 wie bisher aufwändig auseinandergebaut werden müsste. Das Spülen kann dabei durch ein einfaches Verdrehen des Ventilelementes 8 bei gleichzeitigem Zuführen von heißem Wasser/Dampf in Gang gesetzt werden. Trotzdem ist auch bei der erfindungsgemäßen Vorrichtung 1 denkbar, dass das Ventilelement 8 entnehmbar ist.

### Bezugszeichenliste

- 1: Vorrichtung
- 2: Kaffeeautomat
- 3: Dampfzuführkanal
- 4: Luftkammer
- 5: Luftzuführkanal
- 6: Milchzuführkanal
- 7: Unterdruckkammer
- 8: Ventilelement
- 9: Spülkanal
- 10: Emulgierkammer

## Patentansprüche

1. Vorrichtung (1) zum Emulgieren einer Mischung aus Luft, Dampf und Milch, insbesondere ein Milchaufschäumer für einen Kaffeeautomaten (2), mit
- einem Dampfzuführkanal (3),
- einem in eine Luftkammer (4) mündenden Luftzuführkanal (5),
- einem Milchzuführkanal (6), der in einer Spülfunktion von einem Spülfluid durchströmbar ist,
- einer Unterdruckkammer (7), in welcher die Kanäle (3,5,6) münden, und die über eine Emulgierkammer (10) mit der Umgebung verbunden ist,
- einem drehbaren Ventilelement (8), das je nach Drehstellung einen Milchbezug, einen Heißwasserbezug oder einen Milchschaumbezug ermöglicht,
**dadurch gekennzeichnet,**
**dass** das Ventilelement (8) derart ausgebildet ist, dass es in einer weiteren Drehstellung Spülfluid durch den Milchzuführkanal (6), die Luftkammer (4), die Unterdruckkammer (7) und die Emulgierkammer (10) leitet und dadurch deren Reinigung ermöglicht.

2. Vorrichtung nach Anspruch 1,
**dadurch gekennzeichnet,**
**dass** der in die Unterdruckkammer (7) mündende Dampfzuführkanal (3) als Strahlpumpe ausgebildet bzw. an dessen in die Unterdruckkammer (7) mündendem Ende eine derartige Strahlpumpe angeordnet ist.

3. Vorrichtung nach Anspruch 1 oder 2,
**dadurch gekennzeichnet,**
**dass** der Milchzuführkanal (6) das Ventilelement (8) axial durchläuft und im Bereich der Unterdruckkammer (7) T-förmig abgewinkelt ist.

4. Vorrichtung nach einem der vorhergehenden Ansprüche,
**dadurch gekennzeichnet,**
**dass** im Ventilelement (8) ein quer zum Milchzuführkanal (6) verlaufender Spülkanal (9) vorgesehen ist, über welchen in einer vordefinierten Drehstellung Spülfluid vom Milchzuführkanal (6) in die Luftkammer (4) und anschließend in die Unterdruckkammer (7) leitbar ist.

5. Vorrichtung nach Anspruch 4,
**dadurch gekennzeichnet,**
**dass** der Spülkanal (9) orthogonal zum T-förmigen Milchzuführkanal (6) verläuft.

6. Vorrichtung nach einem der Ansprüche 1 bis 5,
**dadurch gekennzeichnet,**
**dass** das Ventilelement (8) zum Milchbezug, zum Milchschaumbezug, zum Heißwasserbezug und zum Spülen jeweils um 90° drehbar ist.

7. Vorrichtung nach einem der Ansprüche 1 bis 6,
**dadurch gekennzeichnet,**
**dass** das Ventilelement (8) als Kunststoffspritzgussteil ausgebildet ist.

8. Kaffeemaschine, insbesondere ein Kaffeeautomat (2), mit einer Vorrichtung (1) nach einem der Ansprüche 1 bis 7.

9. Ventilelement (8) einer Vorrichtung nach einem der Ansprüche 1 bis 7, mit einem Milchzuführkanal (6), der das Ventilelement (8) axial durchläuft und eine T-förmige Gestalt aufweist, wobei ein quer zum Milchzuführkanal (6) und quer zur T-Form desselben verlaufender Spülkanal (9) vorgesehen ist.

10. Ventilelement nach Anspruch 9,
**dadurch gekennzeichnet,**
**dass** das Ventilelement (8) als Kunststoffspritzgussteil ausgebildet ist.
